# EUROPEAN PATENT APPLICATION

(11) **EP 4 216 247 A1**
(43) Date of publication of application: **26.07.2023**
(21) Application number: 22382047.3
(22) Date of filing: 24.01.2022
(51) Int. Cl.: H01G 9/02, H01G 9/042, H01G 9/048, H01G 9/055

(54) **METALLIZED SUBSTRATE ELECTRODE AND ELECTROLYTIC CAPACITOR COMPRISING THE ELECTRODE**

(71) Applicant: TDK Electronics AG, 81671 München (DE)
(72) Inventor: Dobai, László, 9622 SZELESTE (HU); Bacco, Cristiano, 20096 PIOLTELLO - MILANO (IT); Sarkar, Sudipta, 29007 MALAGA (ES)
(74) Representative: Epping - Hermann - Fischer

(57) **Abstract**

An electrode (1) for an electrolytic capacitor, preferably for a wound electrolytic capacitor, is provided. The electrode comprises a carrier substrate (2) and a first metallization (3) on a first side of the carrier substrate. Further, the carrier substrate (2) has a thickness of below 15 µm and the metallization (3) has a thickness of 0.01 to 1 µm.

## Description

The present description relates to an electrode and an electrolytic capacitor comprising the electrode.

Electrolytic capacitors and, in particular, wound electrolytic capacitors are very important in various technologies for short-term storage of electrical energy or for other applications.

There is a continuing demand for an increase of volume efficiency in electrolytic capacitors. This means that there is a demand that either the capacitors become smaller while maintaining the same capacitance or the demand is for the capacitors to maintain their size but achieve an increased capacitance.

However, for conventional wound electrolytic capacitors with etched aluminum cathode and anode and separators between them, possible improvements are hindered by physical restraints both concerning the fabrication process as well as functional demands in the wound electrolytic capacitor.

US 7 990 681 B2 and US 2004 / 0 100 756 A1 describe electrolytic capacitors having a cathode thicknesses being in the range of 15 to 60 µm or even up to 80 µm.

The problem to be solved by the present invention is to improve the capacitor known from prior art and to disclose a cathode suitable for the improved capacitor.

The above problems can at least partly be solved by an electrode according to claim 1 or by a capacitor comprising such an electrode.

As a first aspect, an electrode for an electrolytic capacitor, preferably for a wound electrolytic capacitor, is described. The electrode comprises a carrier substrate and a first metallization on a first side of the carrier substrate. It is particularly preferred that the first metallization is created on the first side of the carrier substrate. Accordingly it is also particularly preferred that the first metallization is attached to the first side of the carrier substrate or adheres to the first side of the carrier substrate.

The electrode construction according to the first aspect is preferably applied to a cathode suited for a wound electrolytic capacitor. The electrode is most preferably a cathode. This means that the principles described below are particularly relevant for a cathode. However, the principles described here may apply to an anode of a wound electrolytic capacitor as well.

The electrode may be foil-like. In particular it may be an electrode foil. In consequence it is preferred that the metallized carrier substrate is also foil-like. The carrier substrate may be a carrier substrate foil.

An above electrode allows for the fabrication of more volume-efficient electrolytic capacitors, in particular in the case that the electrode is a cathode.

The teachings can preferably be applied to a cathode, as the inventors have found that thin metallizations in the range of thickness of 0.01 to 1 µm can be sufficient to replace the functionality of a conventional cathode. On the other hand, for a conventional anode, thicker metallizations would be more advantageous to allow the creation of deep etch structures or an oxide layer.

The inventors have found that conventional electrodes, and in particular conventional cathodes made of aluminum for wound electrolytic capacitors, require a comparatively thick unetched core to provide sufficient stability and tensile strength to be handled in state of the art roll-to-roll processes. Otherwise an accordingly configured electrode may tear or crack. Therefore, conventional cathodes made of etched aluminum can hardly be thinner than 15 µm to be handled in state of the art roll-to-roll processes.

The inventors of the present invention have thoroughly analyzed the construction of cathodes in light of the production in roll-to-roll processes and the electric functionality in the wound electrolytic capacitor. The fabrication process exerts longitudinal stress on a cathode, for which the cathode requires sufficient stability and in particular sufficient tensile strength to withstand the stress. In the wound electrolytic capacitor the cathode at least has to provide a conductive surface providing capacitance. Furthermore it is highly preferred that the conductive surface is also surface enhanced to provide sufficient capacitance. In a conventional cathode both functions are interlaced, as the entire cathode consists of aluminum, similar metals or alloys, wherein the metal both provides the tensile strength and the conductivity. However this construction requires a certain minimum thickness. In light of this, the inventors have separated the electrically functional part from a functional part providing stability or tensile strength. The latter is provided by the carrier substrate, while the electric function is provided by the metallization. Accordingly, the metallization created on the carrier substrate surface can provide the electric conductivity and other electric functions required for a coiled electrolytic capacitor, while the carrier substrate can prevent that in a roll-to-roll process the electrode tears or crack. The carrier substrate carries the first metallization on its first side, but may not provide an electric function itself, while the metallization provides the electric functionality. The carrier substrate may be non-metallic, non-conductive or insulating. In this case it is also possible to reduce the weight of the cathode and accordingly the weight of the wound electrolytic capacitor, as the density of non-metallic substances can likely be lower than those of metals.

The inventors realized that by providing a carrier substrate, it is possible to thin down the electrically functional part, which is the metallization, to a thickness of 0.01 to 1 µm. Furthermore, the electrode as a whole can also have a lower thickness than a conventional electrode. Alternatively a combination of an electrode according to the first aspect together with a separator can be thinner than a conventional electrode together with a separator in a wound capacitor, as is explained in more detail below. In both cases higher volume efficiency can be achieved for a capacitor accordingly.

A cathode according to the invention may be thinner than a conventional cathode. This allows to, inter alia, increase the volume efficiency. With a thinner cathode a wound electrolytic capacitor can be constructed smaller while maintaining a certain capacitance. Alternatively the area of the layers in the wound capacitor coil can be increased, if it is possible to thin down one layer, such as the cathode. The free volume gained by the decrease in thickness allows for increasing the area of all components in the coil of the wound electrolytic capacitor. The area may be increased by providing longer electrodes in the wound electrolytic capacitor coil.

The metallization preferably comprises aluminum. In particular it is preferred that the metallization is made of aluminum. The metallization may consist of aluminum and compounds derived from aluminum, such as oxides and hydroxides of aluminum. Aluminum is highly conductive and can be processed advantageously in thin film techniques to create metallizations in the thickness range of 0.01 to 1 µm. Also, aluminum can be surface enhanced or etched easily.

Furthermore, in the electrode the carrier substrate preferably has a higher tensile strength than the first metallization.

In particular it is preferred that the material of the carrier substrate has a higher tensile strength than the metallization along at least one spatial direction.

In particular it is preferred that the tensile strength of the carrier substrate in the direction of the winding, which is the long expanding direction (longitudinal direction) of an electrode for a wound electrolytic capacitor, is higher than the tensile strength of the metallization. This allows for the electrode to be thinner than for a case in which an electrode purely or mainly consists of the material of the metallization.

Accordingly, for a case of an aluminum metallization on a carrier substrate which has a higher tensile strength than the aluminum, the electrode can be constructed thinner as in a case in which an electrode consists purely of aluminum. None the less the thinner electrode can handle the tensile stress of a roll-to-roll process.

According to a further aspect, a carrier substrate can have a second metallization on its second side. In particular, it is preferred that the carrier substrate has a second metallization created on the second side of the carrier substrate.

For an insulating, non-conductive substrate, which is not capable of being penetrated by an electrolyte of a wound electrolytic capacitor, a second metallization allows for utilizing the capacitance at both sides of the substrate, as on both sides an electrolyte can be in contact with a metallic surface. Thereby the capacitance can be maximized. This also allows both sides of the electrode to be in contact with the electrolyte in a conventional stacking of a wound electrolytic capacitor. Thus the electrode can fully substitute a conventional electrode which being fully metallic can also have an electrode-electrolyte-interface at both sides.

Furthermore, the carrier substrate also provides the tensile strength for the second metallization. Accordingly, in the setup with the carrier substrate having the first and the second metallization on both sides, the carrier substrate has the function of providing the mechanical or tensile strength while the electric function is fulfilled by the first and the second metallization. In particular, it is preferred that the carrier substrate has a higher tensile strength than the second metallization. Furthermore, it is preferred that the material of the first and the second metallization are the same.

In particular it is further preferred that the carrier substrate is a continuous or non-porous substrate or a substrate which is not penetrable by an electrolyte in a wound electrolytic capacitor. Continuous or non-porous carrier substrate allow for having smooth metallizations, which can be accessed by non-elaborate surface enhancing techniques.

It is in particular preferred that the carrier substrate comprises a polymer material.

The inventors of the present invention have found that by using a polymer material for the carrier substrate and two metallizations on both sides of the polymer substrate, electrodes may have a thickness in the range of 4 to 7 µm, while being able to handle the stress of a roll-to-roll process. In particular such electrodes can have less than half the size of a conventional cathode made of aluminum while, functionally, are completely capable of replacing it. Polymers as carrier substrate material may provide a good weight reduction effect as they have both lower density than metals and allow for thinner electrodes.

According to a further aspect, the carrier substrate is capable of at least partly fulfilling the role of an electrolyte comprising, or electrolyte retaining, separator for an electrolytic capacitor. Furthermore the second side of the carrier substrate for this aspect is free or remains free of a metallization.

This means that this aspect relates to a setup in which only one metallization is present on a carrier substrate which is at least partly capable of fulfilling the role of an electrolyte comprising or electrolyte retaining, separator.

In a conventional capacitor setup there is always a separator present between anode and cathode, which itself has a required thickness due to electrical technical requirements, such as providing sufficient isolation and sufficient distance between cathode and anode.

If the material of the carrier substrate is similar to a separator or similarly capable of at least partly fulfilling the role of a separator in a wound electrolytic capacitor, and when only one side is metalized, it is possible that the electrolyte may penetrate or soak the carrier substrate and thereby access the metallization from two sides. This allows for an easier production process as only one side is required to be metallized, while a second anode/cathode interspace is created which allows for increasing the capacitance.

Furthermore, the inventors have found that, concerning its volume or function, the carrier substrate may at least partly replace a separator in a wound electrolytic capacitor setup. In particular, the thickness of the separator can be reduced as at least a part of the separation function can be fulfilled by the carrier substrate. For example the thickness of the separator may be reduced roughly by the thickness of the carrier substrate. It is even possible, as is explained in more detail below, for a carrier substrate with sufficient thickness to completely replace the separator.

This means that for this aspect that the sum of a carrier substrate, which can partly fulfil the role of a separator, and a separator (which may in some cases even be absent) can be thinner than the sum of a conventional electrode and a conventional separator.

It is particularly preferred that the carrier substrate is capable of being penetrated or soaked by the electrolyte at least partially. In particular it is preferred that the material of the carrier substrate is capable of being soaked or penetrated by the electrolyte of an electrolytic capacitor. This has the above mentioned advantages.

In particular to fulfill this the carrier substrate can be porous. The carrier substrate can be sponge-like.

Alternatively, the carrier substrate may be a fibrous carrier substrate. This means that the material of the carrier substrate comprises fibers. The fibers may be either natural fibers or may be artificial fibers. Natural fibers are more preferred as they are wetted more easily by an electrolyte. An example for natural fibers which may be preferably used and which may be comprised in the substrate are cellulous fibers, which show advantageous wetting behavior by an electrolyte.

In the case that the carrier substrate is fibrous, it may be preferred that the fibers are woven so that macroscopically a woven super pattern created for the fibers. However, it is also possible that the fibers are non-woven, which does not exclude that on the microscopic or mesoscopic level a degree of ordering may be present. In this case the fibers may be loose or stick together naturally or may be pressed, matted or felted. It is most preferred in the case of a paper-like substrate, that the substrate is pressed in a calendering process, to increase its tensile strength. Accordingly it is preferred that the paper-like substrate is calendered. Alternatively by having woven substrates an increased tensile strength may be provided. Weaving may increase tensile strength in all spatial directions. Non-woven substrates may have the advantage over woven substrates that they can be more easily soaked by the electrolyte.

In particular the carrier substrate may be a separator material. It is particularly preferred that the material is or comprises paper.

The above-mentioned fibrous or porous materials may furthermore provide a higher tensile strength than the metallization.

Thereby two roles may be fulfilled. Firstly, that the carrier substrate may carry the metallization, and secondly, it may at least partly fulfill the role of a separator.

According to another aspect, the carrier substrate can have a thickness of below 15 µm. Furthermore, the metallization may have a thickness in the range of 0.01 to 1 µm. It is even more preferred that the entire electrode has a thickness of below 15 µm.

Furthermore, the metallization may be surface-enhanced whereby a surface capacitance of at least 5 µF/cm² is provided. It is even more preferred that the metallization provides a surface capacitance of at least 20 µF/cm².

Surface enhancement can be achieved by various methods. This may include application of the metallization to a rough surface of the carrier substrate, by which also the thin metallization becomes rough. Furthermore, post deposition treatments such as lithography or etching or electrochemical etching may be applied.

Surface enhancement of the electrode, in particular when applied as a cathode in a wound electrolytic capacitor, can improve the capacitance of the wound electrolytic capacitor.

According to a further aspect, the carrier substrate provides a tensile strength of at least 10 N/cm to the electrode. Such a tensile strength allows for handling in roll-to-roll processes.

According to a further aspect, the metallization may comprise multiple layers. As described below, several methods for forming the metallization on a carrier substrate may lead to very thin metal films as metallization.

Providing multiple layers one on top of the previous is advantageous, as a desired thickness may be reached such. This may allow for improved surface enhancement for example by post treatment, as a sufficient thickness allows for a deeper three dimensional structuring.

In particular it is preferred, in a case in which the metallization is layered or comprises multiple layers, that the individual layers of the metallization are ribbon-like or strip-like. They can then be arranged in a net-like pattern, one above the other, such that bumps and depressions are formed and thereby the surface area of the metallization can be enhanced.

According to another aspect, a wound electrolytic capacitor is described. The capacitor according to this aspect comprises an anode and a cathode, wherein the cathode has the properties of the electrode in which only one side of the carrier substrate is metallized and wherein the carrier substrate may partly fulfill the role of a separator. All preferable aspects described for this type of electrode or cathode can be applied in in the case of this wound electrolytic capacitor.

In this wound electrolytic capacitor a separator is arranged between the metallized first side of the carrier substrate and the side of the anode facing this metallized first side of the carrier substrate. Furthermore, the first separator and the carrier substrate, which is capable of at least partly fulfilling the role of an electrolyte comprising or electrolyte retaining separator, are soaked by the electrolyte.

In this setup it is possible that the carrier substrate at least partly fulfills the role of a separator for the interspace between cathode and anode which does not have the first separator. In other words the carrier substrate at least partially may act as a separator between the inside of the first metallization and the side of the anode facing the second side of the carrier substrate.

It may be preferred that an interspace created between the non-metallized second side of the carrier substrate, and the side of the anode facing this second side of the carrier substrate, is free from an additional separator.

In this case the role of the separator is fulfilled entirely by the carrier substrate.

According to another alternative aspect, however, it is possible that an additional second separator is arranged between the second side of the carrier substrate, which is the side that is not metallized, and the side of the anode facing the second side of the carrier substrate.

In this case it is possible to have a thinner second separator as in a case in which the substrate is not capable of at least partly fulfilling the role of a separator.

Accordingly, in such a setup, and also in the setup without the second separator, it is possible that the volume efficiency of a wound electrolytic capacitor is increased by having a thinner combined thickness of the cathode and the optional second separator. It is noted that the optional second separator may be either completely, or at least partly, replaced by the cathode.

According to another aspect, a wound electrolytic capacitor is described which has an anode and a cathode which is the electrode that has a carrier substrate metallized on two sides, wherein two separators are arranged between both metallized sides of the cathode and the sides of the anode facing the sides of the cathode in the coil of the wound electrolytic capacitor.

As described above, the cathode may be thinner than a conventional cathode due to the fact that the tensile strength providing carrier substrate can be thinner than the tensile strength providing part of a conventional electrode consisting only of a metal.

It is possible to contact the anode or the cathode in a wound electrolytic capacitor by lead tabs which are assembled on the surface of the electrode and may be rolled into the wound electrolytic capacitor. In particular lead tabs can be applied to a cathode, which is metalized on both sides. In case the substrate is homogenous and solid, it is technically simple to apply lead tabs. For the application of lead tabs it is for this reason particularly preferred that the substrate is non-porous or non-fibrous. This is preferably realized for the substrate which is metallized on both sides and therefore does not require to be fibrous or porous. The lead tabs may, for example, be applied via a cold press to the electrode.

For a cathode in which the carrier substrate is capable of at least partly fulfilling the role of a separator, a lead tab is technically more difficult to apply due to the often more irregular morphology of the carrier substrate material. In this case in particular, but also in the case of the two side metallized cathode, it is more preferable to have the following setup: In the wound electrolytic capacitor it is preferred that at least part of the cathode extends the anode towards one side surface of the capacitor coil and wherein the extended part of the cathode has a metal cover which covers at least part of the side surface, allowing for external contacting.

When the cathode is extending in the direction of the bottom or the top side of the capacitor coil, this side can be coated by a metal cover to connect the extended turns of the cathode. As thus at least some individual turns are connected in parallel by the metal cover the equivalent serial resistance (ESR) can be reduced. In particular this type of connection can be advantageous over lead tabs.

In a wound electrolytic capacitor setup, the metal cover can be the external contact for the cathode, i.e. the negative terminal. The external contact for the anode can be provided via lead tabs.

For all of the above wound electrolytic capacitors having an above defined electrode as the cathode, the thickness reduction allows for elongation of all components of the wound capacitor, i.e. the cathode, the anode and the separators can be longer in a capacitor of fixed dimensions, as the cathode requires less volume in the coil. For example the thinner cathode may allow for a length increase of 7 % to 20 % for the anode, and similarly also for the other components, which may lead to an increase in capacitance of 7 % to 15 % when compared to a conventional capacitor of the volume or outer dimensions.

As another aspect, the use of the electrode as described above as a cathode in a wound electrolytic capacitor is described. The advantageous properties and advantages named for the electrode and the details given with respect to the wound electrolytic capacitor also apply to the use of the electrode as a cathode in a wound electrolytic capacitor.

Furthermore, a process of forming an electrode for a wound electrolytic capacitor in a roll-to-roll process is described, wherein a carrier substrate is continuously wound from a first role and a metallization is continuously applied to at least a part of a first side of the carrier substrate and the metallized parts of the carrier substrate are continuously wound onto a second role.

The carrier substrate may have the above-defined properties. In particular, it can provide sufficient tensile strength in order for the electrode to be processed in a roll-to-roll process. This applies to the present roll-to-roll process, but also for a roll-to-roll for forming a wound electrolytic capacitor coil.

Furthermore, a second metallization may be applied to a second side of the carrier substrate.

In the process the metallization may be applied to the carrier substrate, i.e. to the first side and/or the second side, by physical vapor deposition, atomic layer deposition, chemical vapor deposition or galvanization. Physical vapor deposition may, for example, be thermal evaporation, electron beam evaporation, sputtering, or pulsed laser deposition. These techniques allow for the production of thin or ultra-thin metallizations in the range of 0.01 to 1 µm in thickness.

According to a further aspect, the metallization after forming may be post-treated by plasma etching, electrolytic etching or lithography. Thereby a surface enhancement as described above can be achieved.

According to a further aspect, in the process the metallization may be formed as layers in subsequent roll-to-roll process steps or in one roll-to-roll process step in which metallization sub-layers are applied from several sources.

Having a multi-layered metallization may have the above advantages.

In particular, in subsequent deposition steps, or in subsequent roll-to-roll steps or in one roll-to-roll step with several deposition sources, partial layers may be formed which have the form of ribbons or strips and which may be applied such that a net-like pattern is formed.

Thereby the surface can be enhanced, which means that a larger surface area can be created.

Furthermore, a process of forming a capacitor including an above-described electrode or including the above described process is described which includes winding of the electrodes in a roll-to-roll process, wherein the cathode is an electrode as described above, together with the anode and the separators as described for the above embodiments and furthermore including impregnation or soaking with electrolyte.

Furthermore, a lead tab, or several lead tabs, may be applied to the cathode and/or to the anode for example by welding. In particular this can be suitable for a cathode which has two-sided metallization. Furthermore, in addition or alternatively it is possible that for a wound electrolytic capacitor which has a cathode which is extending towards one side of the wound electrolytic capacitor a metal cover is provided. For example the metal cover may be applied by metal spray which may be a thermal spray process. Examples of thermal spray processes or thermal spray techniques are arc, flame, plasma, high velocity oxygen fuel or other spray layer deposition methods. Alternatively, a combination of these may be applied for one or several metals to form the metal cover.

In the following the invention is described in more detail by means of examples of embodiments and with reference to figures. The figures include both embodiments and process-related information. It is noted that the components are not shown to scale in schematic drawings or representations. In these, components may be shown distorted in their sizes, lengths or length ratios. Such ratios may not be taken from the schematic drawings.
Figure 1 shows an electron microscopy image of a conventionally etched aluminum cathode,
Figure 2 shows an electron microscopy image of an alternating current (AC current) etched aluminum cathode,
Figure 3 shows a cross-section electron image of a fully metallic conventional electrode,
Figure 4 shows a schematic representation of a first embodiment of a cathode,
Figure 5 shows a schematic representation of a second embodiment of a cathode,
Figure 6 shows a schematic representation of a third embodiment of a cathode,
Figure 7 shows a schematic representation of a first embodiment of a process for forming a cathode,
Figure 8 shows a second embodiment of a process for forming a cathode,
Figure 9 shows a wound electrolytic capacitor,
Figure 10 shows a schematic representation of a first embodiment for a stacking in a wound electrolytic capacitor,
Figure 11 shows a schematic representation of a second embodiment of a stacking in a wound electrolytic capacitor.

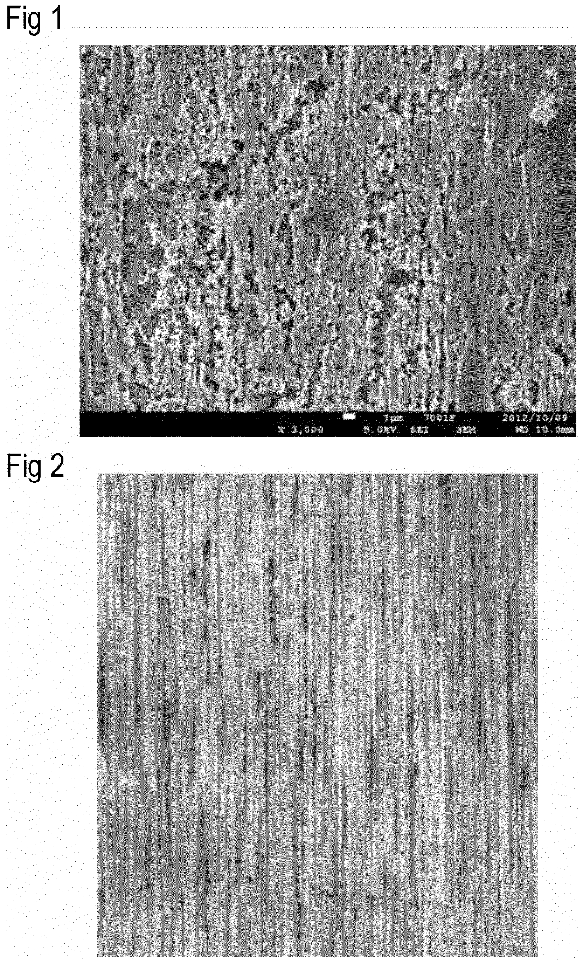

Figure 1 shows a secondary electron image recorded by a scanning electron microscope of a common cathode made of alumina and etched via a non-elaborate electrochemical etching process. A surface enhancement can be realized such. As can be seen from Figure 1 the surface enhancement or the three-dimensional structure of the surface is irregular.

Similar etchings can also be applied to electrodes or cathodes according to the present invention.

Figure 2 shows a secondary electron image recorded via scanning electron microscopy of an aluminum-based cathode foil etched by elaborate alternating current (AC current) etching method. This allows for production of regular structures which are more regular than with less elaborate electrochemical etching as depicted in Figure 1.

Accordingly, the AC etching results in a more regular surface structure, as can be seen in Figure 2, and lead to better efficiency concerning capacitance and also concerning capacitance gain versus weight loss.

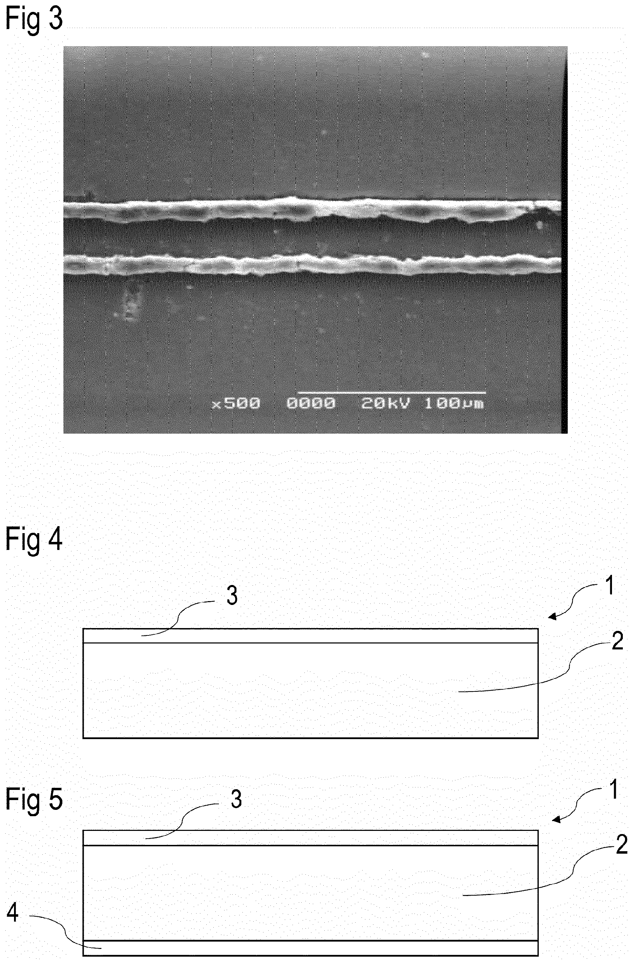

In Figure 3 a cross-section electron microscopy image of a conventional cathode is shown. It becomes apparent that the conventional cathode is comparatively thick, with a thickness of roughly 40 µm. Conventionally the thickness of such cathodes lies in the range of 15 to 60 µm. In particular, roll-to-roll processes used in wound electrolytic capacitor production require that a certain tensile strength of at least about 10 N/cm is met. In order to achieve this the unetched part (in Figure 3 the portion sandwiched by the two brighter regions) must not be too thin.

The inventors of the present invention realized that by separating the mechanical strength providing part from the technically relevant part which is a metallic or a conductive surface, it is possible to reduce the thickness of an electrode in general and of a cathode in particular, which accordingly allows for reducing the volume of a wound electrolytic capacitor or for enlarging the length or the area of all components coiled up in an wound electrolytic capacitor to increase its capacity at a given volume.

Figure 4 shows a schematic representation of a first embodiment of a cathode 1 as an example for an electrode. The cathode 1 has the form of a film or is a cathode film. The cathode 1 comprises a carrier substrate 2. The carrier substrate 2 is non-conductive or non-metallic. A metallization 3 is assembled on a first surface of the carrier substrate 2. The metallization 3 can be created on the first surface of the substrate 2. The cathode 1 is suited for being built into a wound electrolytic capacitor.

It is noted that the principles explained here and in the following for the cathode may also apply to an anode for a wound electrolytic capacitors, as far as technically applicable.

The carrier substrate 2 has a higher tensile strength than the metallization 3. In particular, the carrier substrate 2 is capable of at least providing a tensile strength of 10 N/cm to the electrode.

The metallization is a thin metal film which may be applied by various techniques, as described below. The metallization may be surface-enhanced to provide at least a specific capacitance of 5 µF/cm². The metallization 3 has a thickness of 0.01 to 1 µm. The metallization can comprise or consist of any suitable metal or alloy. However it is most preferred that the metallization comprises aluminum. It is preferred that the electrode has aluminum as a main component. It may consist of aluminum.

The metallization 3 can fulfill the electric function of a conventional metal electrode. However, the metallization 3 may be much thinner than a conventional electrode as the stability and tensile strength are provided by the carrier substrate 2.

In particular, the carrier substrate 2 may be a polymer substrate with a thickness of below 15 µm. In this case a second metallization is preferred as described below.

Alternatively, the carrier substrate 2 may be capable of at least partly fulfilling the role of an electrolyte comprising or electrolyte retaining separator for an electrolytic capacitor. In particular the carrier substrate 2 may be capable of being penetrated or soaked by an electrolyte of an electrolytic capacitor. To do so, the carrier substrate 2 may be porous or fibrous. The fibers may be of any nature, however cellulous fibers are most preferred. In particular the substrate can be a paper-like material similar to the material of a separator in an electrolytic capacitor. Alternatively woven or non-woven fibers may be used. Having these properties, the cathode 2 as depicted in Figure 4 is most suitable with only the first metallization 3 and no further metallization on the carrier substrate 2. In this case, the thickness of the carrier substrate may also be below 15 µm. However the thickness may be higher if the carrier substrate is intended to fully replace a separator in a wound electrolytic capacitor.

In Figure 5 a schematic representation of a second embodiment of a cathode 1 is shown. The cathode 1 may have the same properties as those described for the first embodiment as shown in Figure 4. However, in the case of the cathode according to Figure 5 the carrier substrate 2 cannot be penetrated by an electrolyte. Most preferably it comprises or consists of a polymer. Examples for suitable polymers are polypropylene (PP) or polyethylene terephthalate (PET). In the case of the second embodiment a first metallization 3 and a second metallization 4 have been created on the carrier substrate 2. The metallizations 3 and 4 may be identical concerning their properties and construction.

In the case of a non-penetrable substrate, the cathode 1 can fully replace all the electrical functions of a conventional cathode.

In particular in this case the overall thickness may be below 16 µm. In particular the carrier substrate may have a thickness of below 15 µm, while the metallizations 3 and 4 each have a thickness of 0.01 to 1 µm. It is more preferred that the electrode has a thickness of below 10 µm. Even more preferably, the thickness of the polymer substrate may be in the range of 1 to 7 µm, while the metallizations have the above-defined thickness. Overall this allows for a cathode to have a thickness in the range of 3 to 7 µm, which is most preferred. Thus a considerable thickness reduction using the electrode of Figure 4 can be achieved when compared to a conventional cathode. Accordingly, a thickness reduction when compared to conventional cathodes can be 50 % or higher.

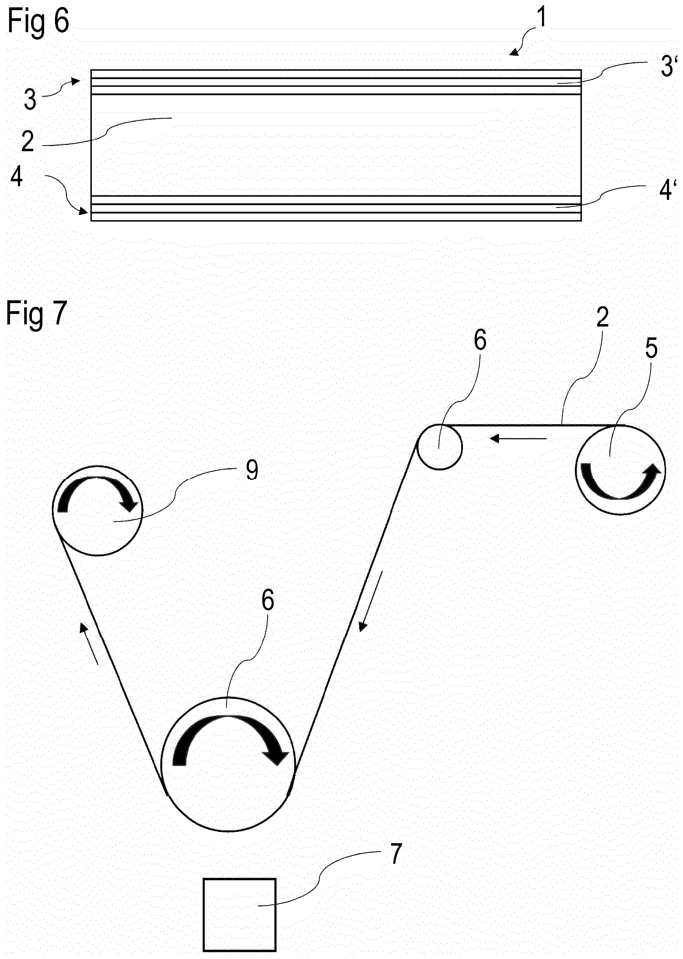

In Figure 6 a schematic representation of a third embodiment of a cathode 1 is shown. The cathode 1 of the third embodiment is identical in its properties to the cathode of the second embodiment as shown in Figure 5. However, the metallizations 3 and 4 each comprise sub-layers 3' and 4', respectively. The metallizations are layered.

By having multiple layers it is possible to achieve desired film thicknesses by various thin film deposition techniques by depositing several layers on top of another. Thus a desired thickness for post-deposition treatment of the metallization may be created.

Furthermore, it is possible to have non-continuous layers, for example layers in the form of ribbons or strips which are arranged to each other in a rectangular way to form a net-like pattern. This net-like pattern creates depressions and bumps on the surface, whereby the active surface is enhanced.

In Figure 7 a schematic representation of a first embodiment of a roll-to-roll process is shown. In the roll-to-roll process for forming a cathode for a wound electrolytic capacitor, a carrier substrate 2 is provided on a first roll 5. The carrier substrate 2 is continuously unwound from the first roll 5. It may pass one or more guiding rolls 6, which guide or redirect the carrier substrate 2. The carrier substrate 2 is continuously rewound onto a second roll 9. In between the first roll 5 and the second roll 9 the carrier substrate 2 is metallized on at least one side by a first metallizer 7. In particular the metallizer 7 may be any device capable of applying or creating a first metallization on a first side of the carrier substrate 2. In particular it is preferred that the metallization is performed via physical vapor deposition techniques (PVD techniques) such as thermal evaporation, electron beam evaporation, sputtering or pulsed laser deposition. Alternatively atomic layer deposition or chemical vapor deposition can be applied. The metallizer 7 can be positioned at any technically suitable position. In the depiction of Figure 7 the metallizer 7 is arranged facing a guiding roll 6, which guarantees a stable position of the passing film with respect to the metallizer 7.

With this setup in Figure 7 within one run it is possible to coat the carrier substrate 2 on one side to achieve a setup such as that shown in Figure 4. In particular, this is suitable for a cathode which is capable of at least partly fulfilling the role of an electrolyte comprising or electrolyte retaining separator for an electrolytic capacitor.

In the case of a polymer substrate or similar substrate, a second metallization can be applied in a similar way by, metallizing the second side of the carrier substrate 2 in a second roll-to-roll process.

After the depicted roll-to-roll process the metallization may be surface enhanced. In particular plasma etching, electrolytic etching or lithography can be applied.

Alternatively, or in addition, it is possible to perform multiple depositions of metallizations on the surface to get a layered structure such as shown in Figure 6. Thereby it is possible to apply partial layers such as ribbons or strip-like forms in a net-like pattern in order to create a surface-enhanced metallization.

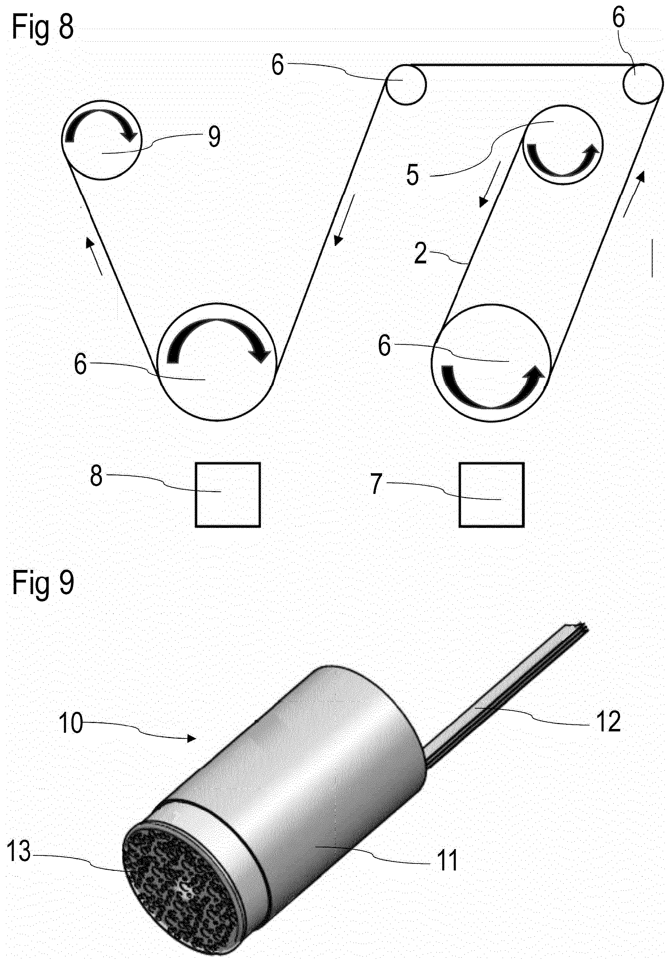

Figure 8 shows a schematic representation of a second embodiment of a process for forming a cathode.

The principles are similar as those described for the first embodiment of the process as shown in Figure 7. In particular the carrier substrate 2 is continuously unwound from a first roll 5 and continuously wound onto a second roll 9. In between the first roll 5 and the second roll 9, the carrier substrate passes several guiding rolls 6. The guiding rolls help to expose the two different sides of the carrier substrate 2 at different points.

The carrier substrate 2 first passes by a first metallizer 7 which metallizes a first side of the carrier substrate 2. After being reguided by several guiding rolls 6, the carrier substrate 2 passes a second metallizer 8 which metallizes the other side (second side) of the carrier substrate 2. Both the first and the second metallizer are positioned facing guiding rolls 6, for the reasons as explained for Figure 7.

Alternative setups are possible in which the second metallizer is positioned such that no reguiding by guiding rolls is necessary, for example by positioning it such that it faces the second side of the carrier substrate 2.

This setup allows for metallizing both sides of the capacitor within one roll-to-roll process in order to form a structure as shown in Figure 5.

By using several evaporators for one side in one setup, or by having multiple roll-to-roll processes one after the other or by having specialized metallizers, it is possible to also form layered metallizations.

Figure 9 shows a wound electrolytic capacitor 10 with all coiled components (which are not visible) in the inside of the capacitor. The wound electrolytic capacitor 10 comprises a side cover 11 which may protect the coil inside it from physical impact.

Furthermore, a metal cover 13 is provided at the bottom of the wound electrolytic capacitor 10. In this particular case the metal cover 13 may allow for external contacting of the cathode, as explained in the following. The anode may be contacted via several lead tabs 12 included into the wound capacitor coil. For example the metal cover may be applied by metal spray which may be a thermal spray process. Examples of thermal spray processes or thermal spray techniques are arc, flame, plasma, high velocity oxygen fuel or other spray layer deposition methods. Alternatively, a combination of these may be applied for one or several metals to form the metal cover.

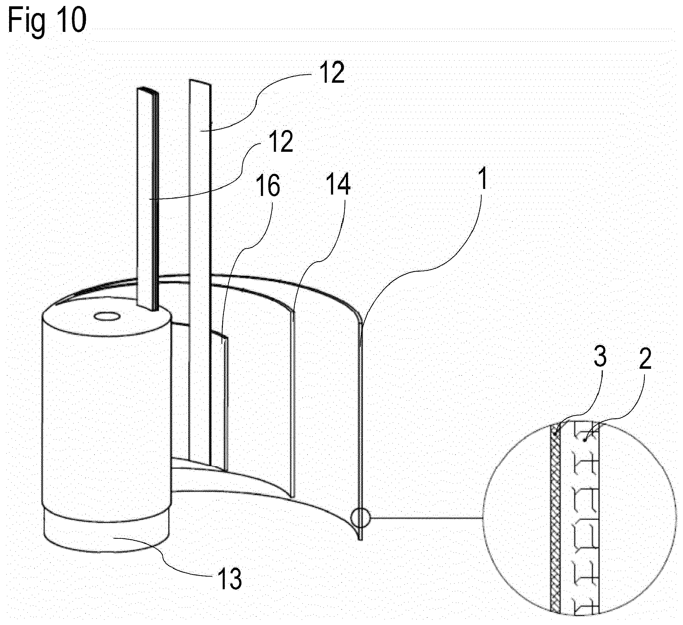

In Figure 10 a schematic representation of a capacitor coil of a wound electrolytic capacitor is shown. The coil is partly unfolded to show the stacking of the layers. The wound electrolytic capacitor comprises an anode 16 in form of an anode film and a cathode 1. The anode 16 may be a conventional anode having a thickness in the range of 110 to 130 µm. The cathode 1 may have the above properties, in particular it may be a cathode which has a carrier substrate that is at least partly capable of fulfilling the role of an electrolyte comprising or electrolyte retaining separator. In particular the explanations as provided for Figure 4 may apply to this cathode 1. Furthermore, as can be seen in the enlarged picture on the right-hand side, the cathode 1 is only metallized on one side (first side) of the carrier substrate 2. The first metallization 3 faces inwards, thereby facing faces towards one side of the anode 16. In between this side of the anode 16 and the first side of the substrate 2 with the metallization 3 thereon, a first separator 14 is assembled. The first separator 14 may have a thickness of 30 to 50 µm. The first separator 14 electrically and spatially separates the cathode 1 and the anode 16 in this interspace. Furthermore, the anode 16 is contacted via lead tabs 12 which are coiled into the wound electrolytic capacitor.

Both the first separator 14 and the carrier substrate 2 are soaked or wetted by the electrolyte of the electrolytic capacitor when built into a capacitor.

In the present depiction, no additional separator is provided in the interspace between the second side of the carrier substrate 2, which is the side which has no metallization on it, and the side of the anode 16 facing this side in the wound electrolytic capacitor coil. In this case the carrier substrate 2 is fully capable of fulfilling the role of a second separator. In particular the carrier substrate 2 is capable of comprising or being soaked by the electrolyte. It allows diffusion of the electrolyte. It is spatially and electrically separating the first metallization 3 from the anode 16 in the direction of the second side of the carrier substrate 2.

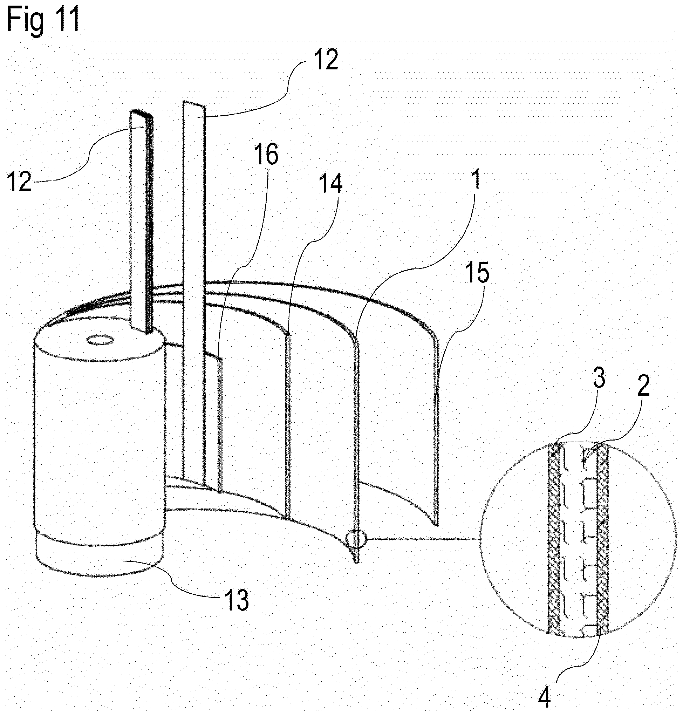

However, alternatively also a second separator may be placed in a similar manner, as will be explained for Figure 11. However, in the case of the depiction of Figure 10 it would be possible to reduce the thickness of the second separator roughly by the thickness of the carrier substrate. This is due to the fact that the carrier substrate is at least partly capable of fulfilling the role of a separator.

The overall thickness of the combination of the cathode 1 and a potential second separator (which in Figure 10 is completely absent) can be less than the sum of the thickness of a conventional cathode with a conventional separator next to it. For a conventional separator the cathode has thicknesses of above 15 µm and the separator may have a thickness in the range of above 30 µm. For the present invention it is possible that the entire cathode can have a thickness of 3 to 7 µm with a substrate at least partly capable of fulfilling the role of a separator. In this case an additional separator (not the first separator) may have a thickness in the range of 15 to 25 µm. Thus a thickness reduction of at least 28 % may be achieved.

Furthermore, the cathode 1 has an extended width towards the side which is the bottom of the capacitor coil. The width is extended with respect to the size of the anode 16 in the coil. On the bottom (side of the capacitor coil) a metal cover 13 is applied which contacts each individual turn of the cathode 1. Thereby external contacting of the cathode is possible, while due to the parallel circuiting formed by the metallization a low equivalent serial resistance (ESR) is achieved. The contacting of the anode is performed via a lead tab.

Alternatively it is possible to also provide lead tabs for the cathode, which is less preferred for the above reasons. In addition it is technically difficult to mount a lead tab on the thin metal film when it is provided on a porous or fibrous substrate.

In Figure 11 a schematic representation of a second embodiment of a coil of a wound electrolytic capacitor is shown. Generally the properties of the second coil may be identical to the first coil as shown in Figure 10. However, in this case the cathode 1 is a cathode as shown in Figure 5, having two metallizations 3 and 4 on both sides of the carrier substrate 2.

The cathode 1 may have a thickness in the range of 3 to 7 µm which is at least half as thick as a conventional aluminum cathode.

The anode 16 may have a thickness in the range of 110 to 130 µm. Furthermore, again a first separator 14 is assembled between the first side of the cathode 1 and the side of the anode 16 facing this first side of the cathode. Furthermore, a second separator 15 is assembled between the second side of the cathode and the other side of the anode which is facing the second side of the cathode. Both separators may have thicknesses in the range of 30 to 50 µm.

In total it is possible by the thickness reduction as described above, to increase the length of the anode, the cathode and the separators by 7 to 20 % when compared to conventional wound electrolytic capacitors with pure aluminum cathodes. Thereby a capacitance increase of 7 to 15 % is possible.

The external electrical contacting can be as described above for Figure 10. However, it is noted that the polymer foil having the metallizations on both sides is more suitable for a case in which also the cathode 1 is provided with lead tabs for external electrical contracting.

However, still also for this configuration, the contacting of the cathode via a metal cover 13 can lead to a reduced equivalent serial resistance.

In Tables 1 and 2 an experimental series on ten capacitors (Cap 1 to Cap 10) according to the embodiment of Figure 11 with a size of 30 x 60 mm is shown. In particular the capacitors have a double-sided metallized polymer film as a cathode.

As can be seen from Table 1, at a frequency of 100 Hz, a capacitance of 640 to about 765 µF could be achieved. For a frequency of 100 Hz an equivalent serial resistance was between 590 to 670 mΩ. The impedance measured for this frequency was between 2179 to 2557 mΩ.

Similar values were achieved for a frequency of 120 Hz. In particular the capacitance was between 634 to 746 µF. The equivalent serial resistance was between 567 and 634 mΩ. Furthermore the impedance was between 1867 and 2177 mΩ.

At 10⁴ Hz the capacitance is in the range of above 305 µF to 329 µF. The equivalent serial resistance is between 247 mΩ and 266 mΩ. The impedance is between 252 mΩ and 271 mΩ.

For 10⁵ Hz the capacitance is between 103 µF and 119 µF. The equivalent serial resistance is between 234 and 252 mΩ. The impedance is between 235 and 252 mΩ.

From the frequency dependance of Table 1 a dissipation factor tan δ of between 29 and 34 is calculated.

**Table 1**

| Frequency | 100 Hz | | | 120 Hz | | | 10⁴ Hz | | | 10⁵ Hz | | | tan δ |
|---|---|---|---|---|---|---|---|---|---|---|---|---|---|
| | C [µF] | ESR [mΩ] | Z [mΩ] | C [µF] | ESR [mΩ] | Z [mΩ] | C [µF] | ESR [mΩ] | Z [mΩ] | C [µF] | ESR [mΩ] | Z [mΩ] | |
| CAP 1 | 642.7 | 635.9 | 2556.8 | 634.4 | 606.2 | 2176.6 | 301.2 | 258.8 | 264.1 | 109.4 | 245.0 | 245.4 | 29.0 |
| CAP 2 | 676.8 | 646.0 | 2438.8 | 669.8 | 613.0 | 2072.9 | 320.2 | 251.2 | 256.1 | 107.3 | 237.9 | 238.3 | 31.0 |
| CAP 3 | 725.0 | 659.1 | 2292.1 | 712.6 | 624.0 | 1962.9 | 318.5 | 251.7 | 256.6 | 108.4 | 238.3 | 238.8 | 33.5 |
| CAP 4 | 746.7 | 638.2 | 2224.8 | 735.2 | 613.0 | 1905.2 | 306.5 | 265.7 | 270.7 | 104.4 | 251.3 | 251.8 | 34.0 |
| CAP 5 | 662.5 | 616.3 | 2480.1 | 653.7 | 590.6 | 2113.1 | 316.6 | 252.0 | 257.0 | 106.4 | 238.6 | 239.0 | 29.1 |
| CAP 6 | 686.5 | 668.7 | 2412.8 | 673.6 | 633.9 | 2068.5 | 311.7 | 260.3 | 265.2 | 103.1 | 246.6 | 247.1 | 32.2 |
| CAP 7 | 669.4 | 643.1 | 2463.2 | 659.7 | 609.4 | 2100.9 | 310.6 | 247.5 | 252.7 | 118.1 | 234.6 | 235.0 | 30.3 |
| CAP 8 | 680.8 | 653.9 | 2427.4 | 661.0 | 605.1 | 2095.9 | 318.2 | 248.1 | 253.1 | 112.3 | 234.9 | 235.3 | 30.2 |
| CAP 9 | 693.1 | 668.7 | 2391.5 | 682.6 | 625.8 | 2041.3 | 320.2 | 250.6 | 255.5 | 105.7 | 237.0 | 237.5 | 32.2 |
| CAP 10 | 758.7 | 590.5 | 2179.4 | 745.7 | 567.9 | 1867.2 | 328.7 | 249.8 | 254.5 | 111.0 | 236.5 | 236.9 | 31.9 |

Furthermore, in Table 2 it can be seen that the self discharge is satisfactory. In particular it is shown that the value of the current after one minute of charge loss via leakage current (LC_{1 min}) is in the range between 218 and 260 µA. The leakage current which took place after two minutes (LC_{2 min}) is between 116 and 150 µA and after five minutes (LC_{5 min}) it is between 61 and 80 µA.

Furthermore, it could be shown in Figure 2 that fairly light wound electrolytic capacitors with a size of 30 × 60 mm can be created using a cathode with a polymer carrier substrate. The weight of the electrolytic capacitors were between 76.9 and 77.5 g. In particular a weight below 77.5 g can be achieved using a double side metallized polymer film cathode for a size of 30 × 60 mm.

**Table 2**

| | Leakage [µA] | | | Weight [g] |
|---|---|---|---|---|
| | LC₁ min | LC₂ min | LC₅ min | |
| CAP 1 | 244.0 | 142.0 | 73.4 | 77.5 |
| CAP 2 | 253.9 | 141.1 | 72.3 | 77.3 |
| CAP 3 | 252.9 | 141.5 | 72.8 | 77.1 |
| CAP 4 | 242.5 | 140.5 | 72.6 | 76.9 |
| CAP 5 | 248.0 | 150.0 | 73.5 | 77.2 |
| CAP 6 | 218.3 | 116.8 | 61.0 | 77.4 |
| CAP 7 | 276.2 | 149.4 | 70.6 | 77.3 |
| CAP 8 | 259.9 | 148.0 | 79.3 | 77.1 |
| CAP 9 | 245.0 | 141.1 | 74.3 | 77.4 |
| CAP 10 | 227.2 | 129.2 | 71.7 | 77.3 |

### Reference sign list

- 1: cathode
- 2: carrier substrate
- 3: first metallization
- 4: second metallization
- 5: first roll
- 6: guiding roll
- 7: first metallizer
- 8: second metallizer
- 9: second roll
- 10: wound electrolytic capacitor
- 11: side cover
- 12: lead tab
- 13: metal cover
- 14: first separator
- 15: second separator
- 16: anode

## Claims

1. Electrode for an electrolytic capacitor (10), comprising a carrier substrate (2) and a first metallization (3) created on the first side of the carrier substrate (2).

2. Electrode according to claim 1, wherein the carrier substrate (2) has a higher tensile strength than the metallization (3).

3. Electrode according claim 1 or 2, wherein the carrier substrate (2) has a second metallization (4) created on the second side of the carrier substrate (2).

4. Electrode according to claim 3, wherein the carrier substrate (2) comprises a polymer material.

5. Electrode according claim 1 or 2, wherein the carrier substrate (2) is capable of at least partly fulfilling the role of an electrolyte comprising or electrolyte retaining separator for an electrolytic capacitor, and wherein the second side of the carrier substrate (2) is free of a metallization.

6. Electrode according claim 5, wherein the carrier substrate (2) is capable of being penetrated or soaked by an electrolyte of an electrolytic capacitor.

7. Electrode according to claim 5 or 6, wherein the carrier substrate (2) is porous.

8. Electrode according to claim 5 or 6, wherein the carrier substrate (2) is a fibrous carrier substrate (2).

9. Electrode according to claim 8, wherein the carrier substrate (2) comprises cellulose fibers.

10. Electrode according to one of claims 1 to 9, wherein the carrier substrate (2) has a thickness of below 15 µm and the metallization (3) has a thickness of 0.01 to 1 µm.

11. Electrode according to one of claims 1 to 10, wherein the metallization (2) is surface enhanced, whereby a specific capacitance of at least 5 µF/cm² is provided.

12. Electrode according to one of claims 1 to 11, wherein the carrier substrate (2) provides a tensile strength of at least 10 N/cm to the electrode.

13. Electrode according to one of claims 1 to 12, wherein the metallization (3) comprises multiple layers.

14. Electrode according to claim 13, wherein the layers of the metallization (3) are ribbons and the layers are arranged such that a net-like pattern is created by the ribbons.

15. Wound electrolytic capacitor (10) comprising an anode (16), a cathode (1), which is an electrode according to claims 5 to 9, and a first separator (14), wherein the first separator (14) is arranged between the metallized first side of the carrier substrate (2) and the side of the anode (16) facing the metallized first side of the carrier substrate (2), and wherein the first separator (14) and the carrier substrate (2) are soaked by the electrolyte.

16. Wound electrolytic capacitor (10) according to claim 15, wherein an interspace created by the second side of the carrier substrate (2) and the side of the anode (16) facing this second side of the carrier substrate (2) is free from an additional separator.

17. Wound electrolytic capacitor (10) according to claim 15, wherein an additional second separator (15) is arranged between the second side of the carrier substrate (2) and the side of the anode (16) facing this second side of the carrier substrate (2).

18. Wound electrolytic capacitor (10) comprising an anode (16) a cathode (1), which is an electrode according to claims 3 or 4, and two separators (14, 15), wherein the two separators (14, 15) are arranged between both metalized sides of the cathode (1) and the sides of the anode (16) facing these sides of the cathode (1).

19. Wound electrolytic capacitor (10) according to one of claims 15 to 18, wherein at least part of the cathode (1) extends the anode (16) towards one side surface of the capacitor coil and wherein the extended parts of the cathode (1) have a metal cover (13), which covers at least part of this side surface, allowing for external contacting.

20. Process of forming an electrode for a wound electrolytic capacitor in a roll-to-roll process, wherein a carrier substrate (2) is continuously unwound from a first role (5), a metallization is applied continuously to at least a part of a first side of the carrier substrate (2), and the metallized parts of the carrier substrate (2) are continuously wound onto a second role (9).
